**Europäisches Patentamt**

**European Patent Office**

**Office européen des brevets**

(19)

(11) Veröffentlichungsnummer : **0 362 716 B1**

## (12) EUROPÄISCHE PATENTSCHRIFT

(45) Veröffentlichungstag der Patentschrift :
**21.10.92 Patentblatt 92/43**

(51) Int. Cl.$^5$ : **F16F 9/06**

(21) Anmeldenummer : **89118118.2**

(22) Anmeldetag : **29.09.89**

(54) **Hydraulischer Teleskop-Stossdämpfer.**

(30) Priorität : **04.10.88 DE 3833672**

(43) Veröffentlichungstag der Anmeldung :
**11.04.90 Patentblatt 90/15**

(45) Bekanntmachung des Hinweises auf die
Patenterteilung :
**21.10.92 Patentblatt 92/43**

(84) Benannte Vertragsstaaten :
**DE ES FR GB IT**

(56) Entgegenhaltungen :
**DE-A- 2 446 643**
**DE-B- 1 198 220**

(56) Entgegenhaltungen :
**DE-U- 1 678 044**
**GB-A- 1 172 555**
**US-A- 2 769 632**
**US-A- 3 077 345**

(73) Patentinhaber : **AUDI AG**
**Auto-Union-Strasse 1 Postfach 220**
**W-8070 Ingolstadt (DE)**

(72) Erfinder : **Gold, Henning, Dr.-Prof.**
**Im Hungerborn 11**
**W-6530 Bingen (DE)**

(74) Vertreter : **Le Vrang, Klaus**
**AUDI AG Postfach 220 Patentabteilung I/EQP**
**W-8070 Ingolstadt (DE)**

EP 0 362 716 B1

**Beschreibung**

Die Erfindung betrifft einen hydraulischen Teleskop-Stoßdämpfer, insbesondere für Radaufhängungen in Kraftfahrzeugen, gemäß dem Oberbegriff des Patentanspruches 1.

Bekannte hydraulische Stoßdämpfer für Radaufhängungen sind auf eine bestimmte Kennlinie eingestellt, in der sie eine gemeinsame Dämpfungscharakteristik für Achse und Aufbau aufweisen und deshalb in ihrer Abstimmung nur einen guten Kompromiß darstellen können. Es sind auch schon Stoßdämpfer mit variablen Drosseln bekannt, jedoch ist deren Steuerung aufwendig und trägt auch nicht allen Betriebszuständen Rechnung.

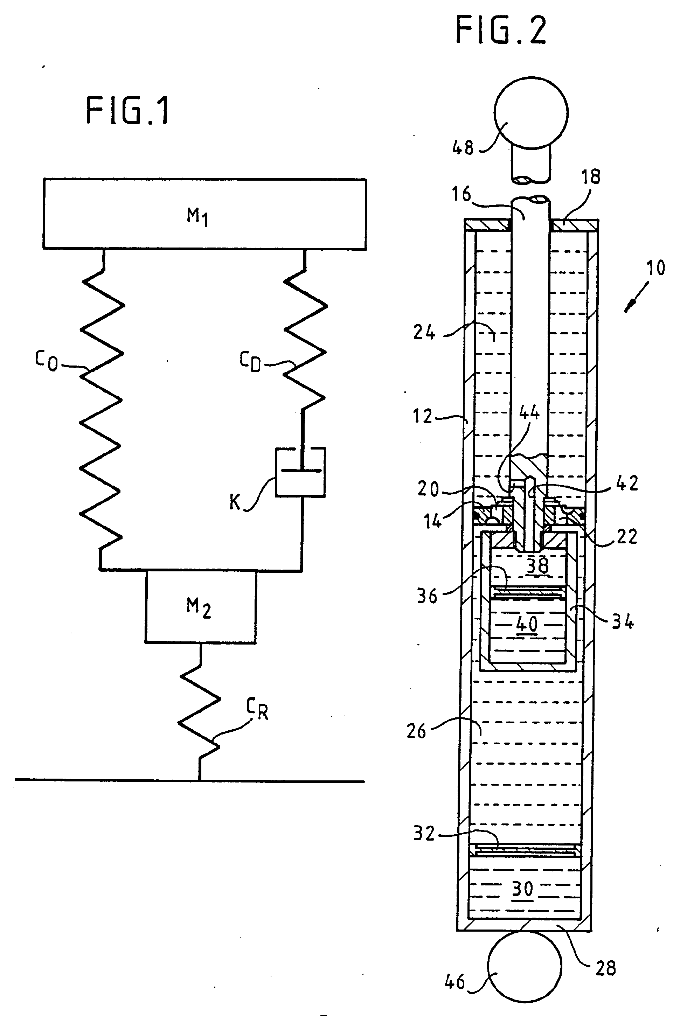

Wenn wie beim gattungsgemäßen Stand der Technik wie er aus der US-A-3077345 bekannt ist auf beiden Seiten des Drosselorganes bzw. des Kolben zu den Ölvolumen je ein Gaspolster angeordnet ist, machen diese die Ölvolumen kompressibel und bewirken somit die Frequenzselektivität. Der Dämpfer hat somit bei geschlossenen (nicht wirksamen) Drosselventilen die sich aus den Gaspolstern ergebende Steifigkeit $C_D$ (vergl. Ersatzschaltbild Fig. 1 der anliegenden Zeichnung). Dabei kann bei sehr hohen Kolbengeschwindigkeiten die max. Dämpferkraft $F_{Dmax}$ nie größer werden als das Produkt aus Amplitude Z x Steifigkeit der Gaspolster $C_D$ nach der Beziehung

$$F_{Dmax} = Z \times C_D$$

Diese Eigenschaft begrenzt jedoch auch die max. mögliche Dämpfungsarbeit und ist deshalb bei der Auslegung der Achsdämpfung (ungefederte Massen) zu berücksichtigen. Aufgabe der Erfindung ist es, einen Stoßdämpfer der gattungsgemäßen Art vorzuschlagen, der bei einfacher und robuster Konstruktion eine frequenzselektive Dämpfung ermöglicht, ohne die maximale Dämpfungsarbeit zu Begrenzen.

Diese Aufgabe wird mit den kennzeichnenden Merkmalen des Patentanspruches 1 gelöst, indem das Volumen der Gaspolster bei 10 bar Druck 10 % bis 20 % des Ölvolumens beträgt (eine Steigerung des Druckes geht proportional in den Gasvolumenanteil ein). Je größer das prozentuale Gasvolumen ist, desto besser ist die Frequenzselektivität und desto geringer ist die relative Achsdämpfung $D_R$ (nach Lehr). In Berücksichtung dessen wird entsprechend Anspruch 2 vorgeschlagen, daß die auf den Radhub bezogene Steifigkeit des Dämpfer $C_D$ nur das 0,5- bis 3-fache, insbesondere jedoch das 0,8- bis 2-fache, der Reifensteifigkeit $C_R$ beträgt. Formal gilt dabei der Zusammenhang

$$C_D = C_R \frac{D_R}{0,22 - 0,33\,D_R}$$

Funktionell besonders vorteilhafte und zweckmäßige Stoßdämpferkonstruktionen alternativer Bauarten sind in den Patentansprüchen 3 bis 10 angeführt. Hinsichtlich näherer Einzelheiten wird auf die nachfolgende Beschreibung der Ausführungsbeispiele bezug genommen.

Gemäß Anspruch 11 kann zwischen des Gaspolstern und den Ölvolumen ein Trennelement, z. B. ein verschiebbarer Kolben, eine elastische Membrane ect. vorgesehen sein; die Gaspolster können jedoch auch in strömungsberuhigten Zonen unmittelbar benachbart den Ölvolumen liegen.

Mehrere Ausführungsbeispiele der Erfindung sind im folgenden mit weiteren Einzelheiten näher beschrieben. Die schematische Zeichnung zeigt in

**Fig. 1** ein Ersatzschaltbild der Federung und Dämpfung an einer Radaufhängung für ein Kfz mit einem frequenzselektiven Stoßdämpfer;

**Fig. 2** einen Längsschnitt durch einen Teleskop-Stoßdämpfer mit einem Gaspolster im Dämpfergehäuse und einem weiteren Gaspolster an der Kolbenstange;

**Fig. 3** einen Längsschnitt eines Stoßdämpfers nach Fig. 1, wobei das weitere Gaspolster in die Kolbenstange integriert ist,

**Fig. 4** einen weiteren Längsschnitt eines Stoßdämpfers nach Fig. 1, mit dem weiteren Gaspolster am dem Kolben entgegengesetzten Ende der Kolbenstange;

**Fig. 5** einen Längsschnitt eines Stoßdämpfers, bei dem beide Gaspolster an der Kolbenstange angeordnet sind;

**Fig. 6** einen Längsschnitt eines Stoßdämpfers mit einem außerhalb liegenden Gaspolster; und

**Fig. 7** einen Längsschnitt eines Stoßdämpfers, bei dem beide Gaspolster am Dämpfergehäuse angeordnet sind.

In dem in der Fig. 1 gezeigten Ersatzschaltbild einer Radaufhängung für Kfz mit frequenzselektivem Stoßdämpfer ist mit $M_1$ die gefederte Masse bzw. der Aufbau und mit $M_2$ die ungefederte Masse bzw. die Achse oder die Radaufhängung bezeichnet. $C_O$ ist die Federsteifigkeit der Feder, $C_R$ die Federsteifigkeit des Reifens und $C_D$ die Federsteifigkeit der beiden in den nachfolgend beschriebenen Stoßdämpferausführungen dargestellten Gaspolster. K schließlich bezeichnet die Dämpfungsrate des Stoßdämpfers, bewirkt u. a. durch die Drosselventile. Die Gesamtfedersteifigkeit $C\infty$ berechnet sich bei nicht wirksamen (geschlossenen) Drosselventilen aus $C_O + C_D$.

$C_D$ ist durch Bestimmung der Volumia der Gaspolster bei 10 bar Druck im Bereich von 10 % bis 20 % des Volumens der flüssigkeitsgefüllten Kammern des Stoßdämpfers auf das 0,5- bis 3-fache, insbesondere auf das 0,8- bis 2-fache der Reifensteifigkeit $C_R$ ausgelegt. Die Auslegung kann ggf. durch den Querschnitt der die Gaspolster verbindenden Kanäle oder Leitungen sowie durch den Gasdruck mit beeinflußt werden.

Der in Fig. 2 dargestellte Teleskop-Stoßdämpfer 10 setzt sich im wesentlichen aus einen zylindrischen Dämpfergehäuse 12 und einem darin verschiebbar geführten Dämpferkolben 14 mit einer Kolbenstange 16 zusammen. Das Dämpfergehäuse 12 ist an seinen beiden Enden dicht abgeschlossen, wobei an der durch die Kolbenstange 16 durchdrungenen Stirnwand 18 in nicht dargestellter Weise ein Führungslager und eine Dichtung vorgesehen sind. Der Dämpferkolben 14, der in bekannter Weise Drosselventile 20,22 aufweist, unterteilt das Dämpfergehäuse 12 in eine obere und eine untere Kammer 24,26, die mit einem Hydrauliköl als unkompresibles Medium gefüllt sind.

Zwischen der unteren Stirnwand 28 des Dämpferzylinders 12 und der mit Hydrauliköl gefüllten Kammer 26 ist ein erstes Gaspolster in einer Kammer 30 angeordnet, welches durch einen verschiebbar in den Dämpferzylinder 12 geführten Trennkolben 32 federnd nachgiebig abgeschlossen ist. Der Gasdruck beträgt ca. 10 bar.

Ferner ist an der Kolbenstange 16 benachbart dem Dämpferkolben 14 ein zylindrisches, geschlossenes Gehäuse 34 befestigt, welches durch einen weiteren Trennkolben 36 in zwei Kammern 38,40 unterteilt ist. Der Trennkolben 36 ist ebenfalls verschiebbar in dem Gehäuse 34 geführt.

Die Kammer 38 ist mit Hydrauliköl gefüllt und steht über Kanäle 42,44 in der Kolbenstange 16 mit der Kammer 24 in Verbindung bzw. bildet mit dieser eine funktionelle Einheit. Die Kammer 40 wiederum ist mit Gas mit einem Druck von ca. 10 bar gefüllt und bildet das zweite, an die Kammer 24 angrenzende Gaspolster.

Die Volumina der beiden mit Gas gefüllten Kammern 30,40 sind so berechnet, daß sie ca. 15 % der jeweils benachbarten, mit Hydraulikmedium gefüllten Kammern 24,26 bei einem Gasdruck von 10 bar betragen. Es versteht sich, daß die beiden Kammern 30,40 zugleich in bekannter Weise als Ausgleichskammern bei Temperaturänderungen des Hydrauliköls sowie bei Volumenänderungen durch die ein- und ausfahrende Kolbenstange 16 wirken.

Der dargestellte Teleskop-Stoßdämpfer 10 ist in bekannter Weise einmal am zylindrischen Gehäuse 12 und an der Kolbenstange 16 mit Befestigungsmitteln 46,48 versehen, über die er an der nicht dargestellten gefederten und ungefederten Masse, insbesondere an der Karosserie und an der Radaufhängung eines Kraftfahrzeuges, angelenkt ist. Durch die beiderseits der mit Hydrauliköl gefüllten Kammern 24,26 angeordneten Gaspolster 30,40 wird eine frequenzselektive Dämpfung erzielt.

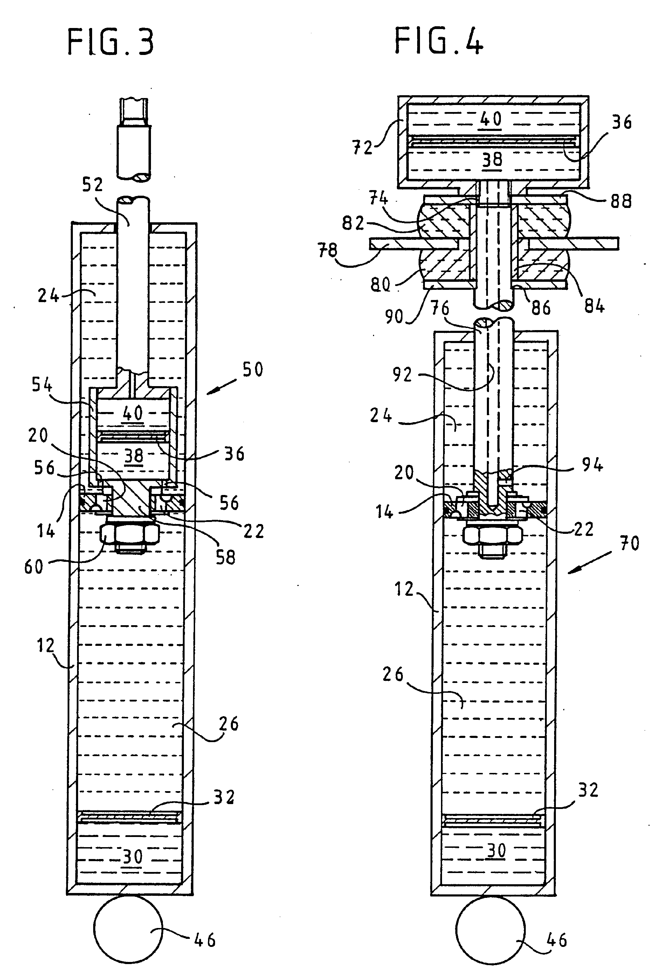

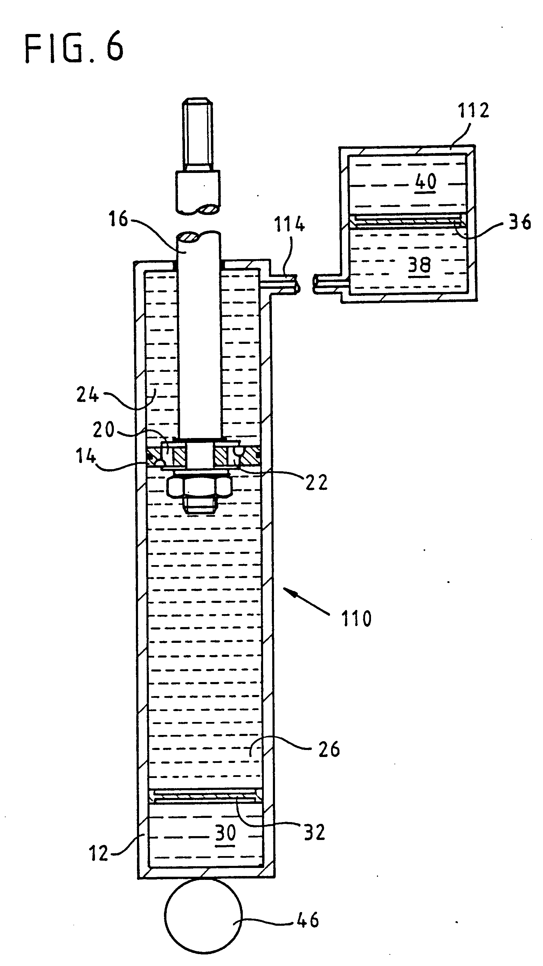

Die Fig. 3 zeigt einen funktional gleichen, baulich jedoch unterschiedlichen Teleskop-Stoßdämpfer 50. Gleiche Teile sind mit gleichen Bezugszeichen versehen. Es sind nur die von der Fig. 1 abweichenden Merkmale erläutert. Dies gilt im übrigen auch für die nachstehende Beschreibung der Ausführungsbeispiele gemäß den Fig. 3 - 6.

Bei dem Teleskop-Stoßdämpfer 50 ist das mit der mit Hydrauliköl gefüllten Kammer 24 zusammenwirkende Gaspolster in einer Kammer 40 ausgebildet, die in die Kolbenstange 52 des Stoßdämpfer 50 integriert ist. Dazu ist an der Kolbenstange 52 ein zylindrisches Gehäuse 54 ausgebildet, daß durch der Trennkolben 36 unterteilt ist. Die mit Hydrauliköl gefüllte Kammer 38 steht über stirnwandseitige Durchbrüche 56 des Gehäuses 54 mit der Kammer 24 des Stoßdämpfer 50 in Verbindung.

An das Gehäuse 54 anschließend ist eine Gewindestutzen 58 vorgesehen, mittels dem in Verbindung mit einer Schraubenmutter 60 der Dämpferkolben 14 an dem Gehäuse 54 bzw. der Kolbenstange 52 befestigt ist.

Bei dem in der Fig. 4 dargestellten Teleskop-Stoßdämpfer 70 ist das mit der Kammer 24 zusammenwirkende Gaspolster 40 außerhalb des Dämpferzylinders 12 angeordnet. Dabei ist das die Kammern 40 und 38 einschließende Gehäuse 72 über eine Gewindeverbindung 74 auf das freie Ende der Kolbenstange 76 aufgeschraubt.

Die Gewindeverbindung 74 dient zugleich zur Anlenkung der Kolbenstange 76 an der Karosserie 78 des Kraftfahrzeuges, wobei zwei Gummipuffer 80,82 und eine Abstandshülse 84 zwischen zwei sich einerseits an einer Ringschulter 86 und andererseits an der Gewindeverbindung 74 abstützende Befestigungsscheiben 88,90 eingespannt sind.

Die mit Hydrauliköl gefüllte Kammer 38 steht über einen Längskanal 92 und einen Querkanal 94 mit der Kammer 24 im Dämpfergehäuse 12 in Verbindung.

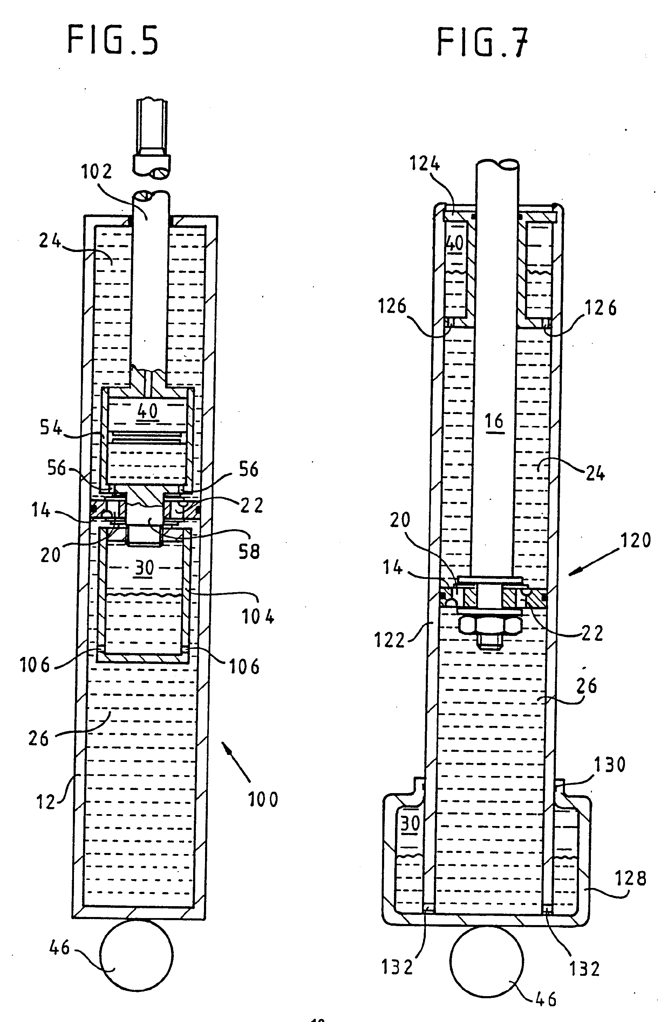

In der in der Fig. 5 gezeigten Ausführung eines Teleskop-Stoßdämpfers 100 sind beide Gaspolster 30,40 unmittelbar an der Kolbenstange 102 innerhalb des Dämpferzylinders 12 angeordnet. Dazu ist das Gaspolster 40, wie in der Fig. 2, beschrieben mittels eines Gehäuses 54 in die Kolbenstange 102 integriert und steht über Druchbrüche 56 mit der Kammer 24 im Dämpferzylinder 12 in Verbindung. Darüberhinausgehend ist an den Gewindestutzen 58 unter Zwischenschaltung des Dämpferkolbens 14 ein weiteres Gehäuse 104 angeschraubt, in dem das Gaspolster 30 ausgebildet ist. In den Gehäuse 104 sind Durchbrüche 106 vorgesehen, die eine Verbindung zur Kammer 26 innerhalb des Dämpferzylinders 12 herstellen. In Abweichung zu den vorstehenden Ausführungen sind jedoch zwischen den Gaspolstern 30,40 und dem angrenzenden Hydrauliköl innerhalb der Gehäuse 54, 104 keine Trennkolben vorgesehen, obwohl dies alternativ möglich wäre. Aufgrund der strömungsberuhigten Anordnung der Gaspolster 30,40 innerhalb der Gehäues 54, 104 wird jedoch eine Verschäumung des Hydrauliköles im Bereich des Dämpferkolbens 14 vermieden, so daß auf eine Anordnung der Trennkolben verzichtet werden kann.

Die Fig. 6 zeigt einen weiteren Teleskop-Stoßdämpfer 110, bei dem das in einem Gehäuse 112 eingeschlossene Gaspolster 40 baulich vom Stoßdämpfer 110 getrennt angeordnet und über eine Leitung 114 mit diesem verbunden ist. Das Gehäuse 112 ist über den Trennkolben 36 in die zwei Kammern 38,40 unterteilt, wobei die Kammer 38 über die Leitung 114 mit der Kammer 24 innerhalb des Dämpferzylinders 12 verbunden ist. Das Gehäuse 112 kann je nach den baulichen Gegebenheiten entweder unmittelbar an dem zylindrischen Dämpfergehäuse 12 angeordnet oder an einer geeigneten Stelle an der Karosserie des Kraftfahrzeuges befestigt sein. Die Leitung 114 kann dabei entweder nur als kurzer Verbindungskanal oder als längere flexible Leitung ausgelegt sein. Insbesondere wenn das Gaspolster 40 geodätisch höher als die Kammer 24 innerhalb des Dämpferzylinders 12 liegt, kann auf den Trennkolben 36 auch verzichtet werden.

Die Fig. 7 schließlich zeigt einen Teleskop-Stoßdämpfer 120, bei dem beide Gaspolster 30,40 in separaten Kammern des Dämpfergehäuses 122 vorgesehen sind. Dazu ist an dem oberen Ende des Dämpferzylinders 122 eine im Querschnitt Doppel-T-förmige Büchse 124 eingesetzt, die einerseits als Führung für die Kolbenstange 16 wirkt und die andererseits zwischen sich und dem zylindrischen Dämpfergehäuse 122 eine das Gaspolster 40 aufnehmende Ringkammer bildet. Diese Ringkammer ist über axiale Durchbrüche 126 mit der Kammer 24 des Dämpferzylinders 122 verbunden.

Das untere Gaspolster 30 liegt ebenfalls ringförmig zwischen dem zylindrischen Dämpfergehäuse 122 und einem dieses tassenförmig umschließenden Gehäuse 128, welches bei 130 dicht mit dem Dämpfergehäuse 122 verschweißt oder verlötet ist. Über Durchbrüche 132 ist die das Gaspolster 30 aufnehmende Ringkammer mit der Kammer 26 innerhalb des Dämpfergehäuses 122 verbunden. Die Befüllung des Stoßdämpfer 120 mit Hydrauliköl ist derart, daß die Gaspolster 30,40 ohne Verwendung eines Trennkolbens innerhalb der separat gebildeten Ringkammern an das Hydrauliköl angrenzen. Dadurch wird ein Austritt von Gas über die Durchbrüche 126,132 in die Kammern 24,26 und damit verbunden eine Verschäumung des Hydrauliköls im Bereich des Dämpferkolbens 14 vermieden.

Die Erfindung ist nicht auf die Ausführungsbeispiele beschränkt. So ist sie selbstverständlich auch auf Stoßdämpfer der Zweirohr-Bauart anwendbar, wobei das eine Gaspolster dann ggf. in der äußeren Ringkammer oder über eine Leitung separat außerhalb des Stoßdämpfergehäuse vorgesehen sein kann.

Anstelle der gezeigten festen Drosselventile könnten auch an sich bekannte, steuerbare variable Drosseln verwendet sein, wodurch eine weiter verbesserte Anpassung des Steifigkeits- und Dämpfungsverhaltens des Stoßdämpfer (z. B. besonders sportliche oder komfortable Auslegung) erzielbar wäre.

Die Erfindung ist ferner auch bei hydropneumatischen Feder-Dämpfer-Elementen einsetzbar, bei denen an die eine Flüssigkeitskammer ein Gaspolster als Federelement angeschlossen ist, die Drosseln in einer festen Trennwand sitzen und der Kolben die andere Flüssigkeitskammer abschließt. Hier ist dann das zweite Gaspolster an die durch den Kolben abgeschlossene Kammer angeschlossen bzw. in dieses angeordnet. Dabei ist $C_D$ genauso zu wählen wie eingangs beschrieben. $C_D$ berechnet sich hier aus $C_O$ (Steifigkeit bei wirksamen Drosseln) und $C\infty$ (Drosseln unwirksam) wie folgt: $C_D = C\infty - C_O$.

**Patentansprüche**

1. Hydraulischer Teleskop-Stoßdämpfer, insbesondere für Radaufhängungen in Kraftfahrzeugen, mit einem Dämpferkolben (14), der mit einer Kolbenstange (52) verbunden ist, die in einem zylindrischen Dämpfergehäuse verschiebbar geführt ist und aus dem Dämpfertgehäuse einseitig austritt, und mit zwei flüssigkeitsgefüllten Kammern (24, 26), die über Drosselventile (20, 22) miteinander verbunden sind, wobei beide Kammern (24, 26) mit Gaspolstern (30, 40) zusammenwirken, **dadurch gekennzeichnet**, daß das Volumen der Gaspolster (30,40) bei 10 bar Druck 10 % bis 20 % des Volumens der flüssigkeitsgefüllten Kammern (24,26) beträgt.

2. Stoßdämpfer nach Anspruch 1, **dadurch gekennzeichnet**, daß die auf den Radhub bezogene Steifigkeit $C_D$ das 0,5- bis 3-fache, insbesondere jedoch das 0,8- bis 2-fache der Reifensteifigkeit $C_R$ beträgt.

3. Stoßdämpfer nach den Ansprüchen 1 und 2, wobei die Drosselventile in dem die beiden Kammern unterteilenden Kolben vorgesehen sind, **dadurch gekennzeichnet**, daß das eine Gaspolster (30) im Dämpfergehäuse und das andere Gaspolster (40) an der Kolbenstange (16) angeordnet ist.

4. Stoßdämpfer nach Anspruch 3, **dadurch gekennzeichnet**, daß an der Kolbenstange (16) ein weiteres, das eine Gaspolster (40) enthaltendes Gehäuse (34) ausgebildet ist, daß über Kanäle (42,44) in der Kolbenstange (16) mit der einen flüssigkeitsgefüllten Kammer (24) verbunden ist (Fig. 1).

5. Stoßdämpfer nach Anspruch 4, **dadurch gekennzeichnet**, daß das Gehäuse (54) in die Kolbenstange (52) integriert ist (Fig. 2).

6. Stoßdämpfer nach Anspruch 4, **dadurch ge-**

kennzeichnet, daß das Gehäuse (54) unmittelbar benachbart dem Dämpferkolben (14) an der Kolbenstange (52) angeordnet ist (Fig. 2 und 3).

7. Stoßdämpfer nach Anspruch 4, **dadurch gekennzeichnet**, daß das Gehäuse (72) außerhalb des Dämpfergehäuses (12) auf die Kolbenstange (76) aufgesetzt ist (Fig. 3).

8. Stoßdämpfer nach den Ansprüchen 1 und 2, **dadurch gekennzeichnet**, daß das eine Gaspolster (30) im Dämpfergehäuse (12) und das andere Gaspolster (40) außerhalb des Dämpfergehäuses (12) angeordnet und über eine Leitung (92;114)' mit der einen flüssigkeitsgefüllten Kammer (24) verbunden ist (Fig. 3 und 6)

9. Stoßdämpfer nach den Ansprüchen 1 und 2, **dadurch gekennzeichnet**, daß beide Gaspolster (30,40) in an der Kolbenstange (102) angeordneten Gehäusen (54,104) gebildet sind, wobei die Gehäuse über Durchbrüche (56,106) mit den korrespondierenden flüssigeitsgefüllten Kammern (24,46) verbunden sind (Fig. 4).

10. Stoßdämpfer nach den Ansprüchen 1 und 2, **dadurch gekennzeichnet**, daß beide Gaspolster (30,40) in separaten Kammern des Dämpfergehäuses (122) aufgenommen und über Durchbrüche (126,132) mit der jeweils benachbarten flüssigkeitsgefüllten Kammer (24,26) verbunden sind (Fig. 6).

11. Stoßdämpfer nach einem oder mehreren der vorhergehenden Ansprüche, **dadurch gekennzeichnet**, daß zumindest bei geodätisch tiefer liegenden Gaspolstern (30,40) innerhalb eines Gehäuses (34;54;72;104;112; 128) ein Trennelement (Trennkolben 32,36) zwischen den Gaspolstern (30,40) und der Flüssigkeit vorgesehen ist.

**Claims**

1. Hydraulic telescopic-type shock absorber, more particularly for suspension systems on- motor vehicles, having a damping piston (14) which is joined to a piston rod (52) adapted to move in a cylindrical damper housing and emerging from the damper housing at one end, and having two liquid-filled chambers (24, 26) interconnected by means of throttle valves (20, 22), the two chambers (24, 26) cooperating with cushions of gas (30, 40), characterised in that at a pressure of 10 bars the volume of the gas cushions (30, 40) is 10% to 20% of the volume of the liquid-filled chambers (24, 26).

2. Shock absorber according to claim 1, characterised in that the stiffness $C_d$, based on the movement of the wheel, is 0.5 to 3 times the tyre stiffness $C_R$, but more particularly 0.8 to twice the latter.

3. Shock absorber according to claims 1 and 2, wherein the throttle valves are provided in the piston dividing the two chambers, characterised in that one gas cushion (30) is disposed in the damper housing and the other gas cushion (40) on the piston rod (16).

4. Shock absorber according to claim 3, characterised in that an additional housing (34) containing one gas cushion (40) is incorporated on the piston rod (16), said housing being connected to one liquid-filled chamber (24) via ducts (42, 44) in the piston rod (16) (Fig. 1).

5. Shock absorber according to claim 4, characterised in that the housing (54) is integrated into the piston rod (52) (Fig. 2).

6. Shock absorber according to claim 4, characterised in that the housing (54) is disposed immediatly adjacent to the damping piston (14) on the piston rod (52) (Figs. 2 and 3).

7. Shock absorber according to claim 4, characterised in that the housing (72) is placed onto the piston rod (76) outside the damper housing (12) (Fig. 3).

8. Shock absorber according to claims 1 and 2, characterised in that one gas cushion (30) is disposed in the damper housing (12) and the other gas cushion (40) outside the damper housing (12) and is connected by a line (92; 114) to one liquid-filled chamber (24) (Figs. 3 and 6).

9. Shock absorber according to claims 1 and 2, characterised in that the two gas cushions (30, 40) are formed in housings (54, 104) disposed on the piston rod (102), the housings being connected by passages (56, 106) to the corresponding liquid-filled chambers (24, 46) (Fig. 4).

10. Shock absorber according to claims 1 and 2, characterised in that the two gas cushions (30, 40) are accommodated in separate chambers of the damper housing (122) and are connected by passages (126, 132) to the respective adjoining liquid-filled chamber (24, 26) (Fig.6).

11. Shock absorber according to one or more of the preceding claims, characterised in that at least in cases where the gas cushions (30, 40) lie geodetically lower inside a housing (34; 54; 72; 104; 112; 128) a separating element (separating piston 32, 36) is provided between the gas cushions (30, 40) and the liquid.

**Revendications**

1.- Amortisseur télescopique hydraulique, en particulier pour suspensions de roues de véhicules automobiles, comportant un piston d'amortisseur (14) qui est raccordé à une tige de piston (52) qui est mobile et guidée dans un carter cylindrique d'amortisseur et qui sort d'un côté du carter d'amortisseur, ainsi que deux chambres remplies de liquide (24, 26) qui sont en communication mutuelle par des valves d'étranglement (20, 22), ces deux chambres (24, 26) coopérant avec des coussins de gas (30, 40), caractérisé en ce que le volume des coussins de gas (30, 40) s'élève, sous une pression de 10 bar à 10-20% du volume des chambres remplies de liquide (24, 26).

2. - Amortisseur selon la revendication 1, caractérisé en ce que la rigidité Co rapportée à la course de la roue s'élève à 0,5-3 fois, en particulier à 0,8-2 fois la rigidité du pneu ($C_R$).

3. - Amortisseur selon la revendication 1 ou 2, dans lequel les valves d'étranglement sont prévues dans le piston qui sépare les deux chambres, caractérisé en ce que l'un des coussins de gas (30) est disposé dans le carter d'amortisseur et l'autre coussin de gaz (40) est disposé sur la tige de piston (16).

4. - Amortisseur selon la revendication 3, caractérisé en ce qu'il est formé, sur la tige de piston (16), un boîtier supplémentaire (34) qui contient l'un des coussins de gaz (40) et qui est en communication, par des passages ( 42, 44 ) formés dans la tige de piston (16), avec l'une des chambres remplies de liquide (24).

5.- Amortisseur selon la revendication 4, caractérisé en ce que le boîtier (54) est intégré dans la tige de piston (52) (fig. 3).

6.- Amortisseur selon la revendication 4, caractérisé en ce que le boîtier (54) est disposé sur la tige de piston (52) au voisinage immédiat du piston d'amortisseur (14) (fig. 3 et 5).

7.- Amortisseur selon la revendication 4, caractérisé en ce que le boîtier (72) est placé sur la tige de piston (76) à l'extérieur du carter d'amortisseur (72) (fig. 4).

8.- Amortisseur selon la revendication 1 ou 2, caractérisé en ce qu'un coussin de gaz (30) est disposé dans le carter d'amortisseur (12) et l'autre coussin de gaz (40) est disposé à l'extérieur du carter d'amortisseur (12) et est en communication, par une conduite (92; 114) avec l'une des chambres remplies de liquide (24) (fig. 4 et 6).

9. - Amortisseur selon la revendication 1 ou 2, caractérisé en ce que les deux coussins de gaz (30, 40) sont formés dans des boîtiers (54, 104) disposés sur la tige de piston (102), les boîtiers étant en communication, par des ouvertures (56, 106), avec les chambres remplies de liquide (24, 46) correspondantes (fig. 5).

10.- Amortisseur selon la revendication 1 ou 2, caractérisé en ce que les deux coussins de gaz (30, 40) sont formés dans des chambres séparées du carter d'amortisseur (122) et sont en communication, par des ouvertures (126, 132), avec les chambres remplies de liquide (24, 26) respectivement voisines (fig. 7).

11.- Amortisseur selon l'une quelconque des revendications 1 à 10, caractérisé en ce qu'au moins lorsque les coussins de gaz (30, 40) sont à un niveau géodésique plus bas dans un boîtier (34; 54; 72; 104; 112; 128), il est prévu un élément de séparation (piston de séparation 32, 36) entre les coussins de gaz (30, 40) et le liquide.

# FIG.1

# FIG.2

# FIG.3

# FIG.4

# FIG. 6

# FIG.5

# FIG.7